(19) Europäisches Patentamt
European Patent Office
Office européen des brevets

(11) Veröffentlichungsnummer : **0 062 213**
**B1**

(12) **EUROPÄISCHE PATENTSCHRIFT**

(45) Veröffentlichungstag der Patentschrift : **19.08.87**

(51) Int. Cl.⁴ : **C 08 L 49/00**, C 08 J 5/00

(21) Anmeldenummer : **82102338.9**

(22) Anmeldetag : **22.03.82**

(54) **Kletten- bzw. faserförmige, dotierte Polyacetylenteilchen enthaltende thermoplastische Kunststoffe und Verfahren zu ihrer Herstellung.**

(30) Priorität : **02.04.81 DE 3113331**

(43) Veröffentlichungstag der Anmeldung : **13.10.82 Patentblatt 82/41**

(45) Bekanntmachung des Hinweises auf die Patenterteilung : **19.08.87 Patentblatt 87/34**

(84) Benannte Vertragsstaaten : **CH DE FR GB IT LI NL**

(56) Entgegenhaltungen :
**EP-A- 0 017 133**
**EP-A- 0 023 047**
**EP-A- 0 045 905**
**EP-A- 0 045 908**
**GB-A- 2 072 197**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hocker, Jürgen, Dr.**
**Eichenweg 6**
**D-5060 Bergisch-Gladbach 2 (DE)**
Erfinder : **Dhein, Rolf, Dr.**
**Deswatinesstrasse 30**
**D-4150 Krefeld (DE)**

**EP 0 062 213 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist bekannt, Polyacetylene durch Polymerisation von Acetylen mit Hilfe von metallorganischen Mischkatalysatoren herzustellen (J. Polym. Sci. Bd. 12, Seiten 11-20). Es ist ferner bekannt, kristalline Folien aus Polyacetylen zu dotieren durch Behandeln mit gasförmigen Elektronenakzeptordotiermitteln, so daß ihre elektrische Leitfähigkeit verbessert wird (US-PS 4 222 903).

Gegenstand der Erfindung sind thermoplastische Kunststoffe, die 0,01 bis 50 Gew.-%, vorzugsweise 0,1 bis 20 Gew.-%, und insbesondere 0,5 bis 5 Gew.-% dotiertes Polyacetylen in fein verteilter Kletten- oder Faserform enthalten, sowie ein Verfahren zu ihrer Herstellung.

Ausgangspunkt für die vorliegende Erfindung ist eine Suspension von Polyacetylenteilchen in Form von Faserknäuelchen oder « Kletten » (Fig. 1). Diese Suspension erhält man, indem man gasförmiges Acetylen bei Temperaturen von — 100 °C bis + 80 °C in eine Lösung eines metallorganischen Mischkatalysators in einem organischen Lösungsmittel unter Agitation einleitet, bis sich pro Liter Lösung maximal 30 g Polyacetylen gebildet haben. Das Lösungsmittel für den Katalysator und gleichzeitig Suspendiermittel für die Polyacetylenteilchen ist in der Regel ein aliphatischer oder aromatischer Kohlenwasserstoff, der auch halogeniert sein kann, beispielsweise Benzol, Toluol, Chlorbenzol, Tetralin, Methylenchlorid oder Chloroform.

Der metallorganische Mischkatalysator oder Ziegler-Katalysator ist ein Umsetzungsprodukt aus, einerseits, Verbindungen von Schwermetallen der Gruppen 4b, 5b, 6b, 7b und 8 des Periodensystems der Elemente (Handbook of Chemistry and Physics, 47. Auflage (1966), S. B. 3 — Chem. Rubber Company, Cleveland, Ohio/USA), und, andererseits, Aluminiumalkylen oder Aluminiumalkylhalogeniden. Ziegler-Katalysatoren sind genau bekannt. Bevorzugt verwendet man für die Herstellung von Polyacetylenteilchen Katalysatoren aus 0,05 bis 0,2 Mol Vanadium-Verbindung der Formel

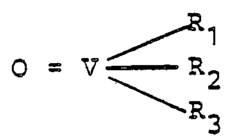

worin

$R_1$ Halogen (Chlor),

$R_2$, $R_3$, unabhängig voneinander, Halogen (Chlor), $OR_5$ ($R_5 = C_1$-$C_{20}$-Alkyl, geradkettig, cyclisch oder verzweigt), bedeuten und 0,1 bis 20 Mol, bevorzugt 1-10 Mol, eines Aluminiumalkyls der Formeln $Al(R_4)_3$, $AlX(R_4)_2$, $AlX_2(R_4)$, $Al_2X_3(R_4)_3$, worin

$R_4$ $C_1$-$C_{12}$-Alkyl, bevorzugt Methyl, Ethyl, Propyl, Isopropyl, Isobutyl, Octyl,

X Halogen

bedeuten.

Besonders geeignete Vanadiumverbindungen sind :

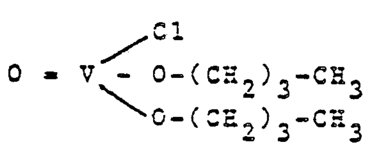

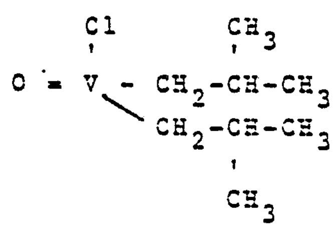

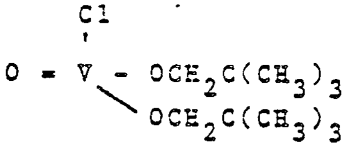

Besonders geeignete Aluminiumalkyle sind : Triethylaluminium, Tripropylaluminium, Triisopropylaluminium, Tributylaluminium, Triisobutylaluminium, Trioctylaluminium.

Geeignete Lösungsmittel sind insbesondere Kohlenwasserstoffe wie Benzol, Toluol, Hexan, Cyclohexan, Tetralin, Dekalin, halogenierte Kohlenwasserstoffe, wie Methylenchlorid, Chloroform, Chlorbenzol.

Die Katalysatoren werden durch Umsetzung der Vanadiumverbindung und der Aluminiumverbindung im Lösungsmittel bei Temperaturen von — 100 bis + 30 °C in an sich bekannter Weise hergestellt. Zur nachfolgenden Polymerisation benutzt man im allgemeinen Lösungen, die 5 bis 100 mMol Aluminium pro Liter Lösungsmittel enthalten. In diese Lösung wird Acetylen unter anaeroben Bedingungen eingeleitet, bei Temperaturen von — 100 bis + 80 °C, bevorzugt — 80 bis + 20 °C. Es entsteht dabei eine Suspension

von Polyacetylen. Die suspendierten Teilchen sehen unter dem Mikroskop wie kleine Kletten aus, mit einem Durchmesser von ca. 0,01-1,0 mm.

Die so erhaltenen Suspensionen von Polyacetylenteilchen enthalten im allgemeinen 0,01 bis 30 g pro Liter, bevorzugt 0,1 bis 10 g Polyacetylenteilchen pro Liter. Es kann vorteilhaft sein, diese Suspension vor ihrer Weiterbehandlung noch einmal mechanisch zu homogenisieren, z. B. mit einem Ultraturrax, dabei soll die Faserstruktur der Teilchen erhalten bleiben.

Vor Dotierung muß in diesen Suspensionen zunächst der Ziegler-Katalysator desaktiviert bzw. entfernt werden ; dies kann man in üblicher Weise durch Zufügen von Alkoholen wie Methanol, Ethanol, oder Gemischen davon oder durch Ausschütteln mit wäßrigen Säuren, z. B. Salzsäure erreichen. Man kann aber auch das Suspendiermittel, in dem der Katalysator gelöst ist, austauschen. Dies wird man tun, wenn es darauf ankommt, die Katalysatorbestandteile zu entfernen oder wenn das vorhandene Suspendiermittel für die weitere Verarbeitung ungeeignet ist.

Zur Dotierung setzt man das Dotierungsmittel in Substanz oder in Lösung der Suspension zu. Man kann bei Temperaturen von — 78 bis + 100 °C arbeiten, bevorzugt sind 10-30 °C. Die Menge Dotiermittel ist im allgemeinen $1 \times 10^{-5}$ bis $4 \times 10^{-1}$ Mol pro Grammäquivalent an —CH-Einheiten (= 13 g Polyacetylen), bevorzugt $1 \times 10^{-3}$ bis $2 \times 10^{-1}$ Mol.

Überschußdotiermittel kann in der Suspension bleiben, z. B. durch erneuten Austausch des Suspendiermittels entfernt oder durch geeignete Maßnahmen zerstört werden.

Es ist sowohl p-Dotierung als auch n-Dotierung möglich ; zur p-Dotierung kann man Oxidationsmittel verwenden.

Beispiele sind :

Chlor, Brom, Iod, JCl, Halogenverbindungen wie $AsF_5$, $SbF_5$, $SbCl_5$, $AsCl_5$, $PF_5$, $POF_3$, Oxide wie NO, $NO_2$, konz. $H_2SO_4$, $H_2O_2$, $CrO_3$ oder auch Sauerstoff, Ozon, bzw. Peroxyverbindungen.

Zur n-Dotierung verwendet man meist starke Reduktionsmittel.

Beispiele sind :

Alkalimetalle oder deren Naphthalide, wie Natrium, Kalium, Natriumnaphthalid oder auch Elektronendonatoren wie Amine.

Man kann die dotierten Polyacetylenteilchen aus ihren Suspensionen isolieren, jedoch wird erfindungsgemäß die Suspension gelöst verwendet. Sie wird mit dem Kunststoff vereinigt und das Suspendiermittel danach entfernt, wobei eine feste, thermoplastisch verformbare Masse (in Granulat- oder Pulverform) erhalten wird.

Es gibt mehrere Ausführungsformen :

(1) Wenn das Kunststoffpulver im Suspendiermittel Schwer löslich ist, kann man es in der Polyacetylensuspension suspendieren und gemeinsam mit dem Polyacetylen abfiltrieren. Man erhält dann ein homogenes Gemisch. (2) Wenn der Kunststoff löslich ist, kann man ihn in der Suspension von Polyacetylenteilchen auflösen und dann das Suspendiermittel entfernen, z. B. durch Sprühtrocknung oder Gefriertrocknung oder man fällt (3) das Polymere mit einem geeigneten Fällungsmittel und filtriert es gemeinsam mit dem dotierten Polyacetylen ab.

Besonders geeignete Kunststoffe sind Polyethylen, Polypropylen, Polybutadien, Polyisopren, Polyvinylhalogenide (PVC), Polyacrylnitril, Polymethacrylate, Polyacrylamide, Polyvinylalkohol, Polycarbonate, Celluloseester, Polyamide, Styrol-Homo- und Copolymerisate (z. B. ABS), Polyester oder Polyurethane.

Man erhält zur thermoplastischen Verarbeitung geeignete Pulver, die aber auch aus Lösungen verarbeitet werden können. Diese Pulver können auch als Pulverlacke zur Herstellung von Überzügen dienen. Die erfindungsgemäßen, dotiertes Polyacetylen enthaltenden Kunststoffe haben sehr gute mechanische Eigenschaften. Die elektrische Leitfähigkeit läßt sich in weiten Grenzen variieren. Besonders geeignet ist ein Zusatz von dotiertem Polyacetylen zur Erzielung antistatischer Eigenschaften von Kunststoffen.

## Ausführungsbeispiele

### Beispiel 1

Herstellung des Katalysators, Polymerisation und Aufarbeitung

In eine 2-l-Becherglasrührapparatur werden 1,3 Liter Toluol vorgelegt und unter einem Stickstoffstrom 300 ml Toluol abdestilliert. Unter Trockeneiskühlung werden bei — 78 °C 4 ml (2 mMol) Bis-(2,2-dimethylpropoxy)-vanadiumoxychlorid 0,5 molar in Toluol und 20 ml (20 mMol) Aluminiumtriisobutyl 1 molar in Toluol zugesetzt. Die Apparatur steht dabei ständig unter einem Stickstoffstrom. Mit einer Geschwindigkeit von 10 l pro Stunde wird unter Rühren 1 Stunde reines Acetylen durchgeleitet. Das Polyacetylen fällt als Niederschlag aus. Es handelt sich um rosa bis violette klettenförmige Gebilde mit einem Durchmesser von ca. 0,05 bis 0,5 mm. Die so erhaltene Suspension enthält 4 g Polyacetylen pro

Liter. Die Reaktion wird mit 0,5 g 4-Methyl-2,6-di-tert.-butylphenol (Ionol) in 400 ml absolutem Toluol abgestoppt und das Reaktionsgemisch mit Stickstoff ausgeblasen, wobei die Temperatur auf 20 °C ansteigt.

Beispiel 2

In eine 2-l-Becherglasrührapparatur werden 1 000 ml absolutes Methylenchlorid vorgelegt. Man kühlt auf —78 °C ab, setzt 4,2 ml (12,5 mMol) Titantetrabutylat (100 %ig) und 50 ml (50 mMol) Aluminiumtriisobutyl 1 molar in Methylenchlorid zu.

Unter Rühren werden innerhalb einer Stunde 10 g Acetylen bei —78 °C durch die Katalysatorlösung geleitet, wobei dunkles Polyacetylen ausfällt. Die Reaktion wird mit einer Lösung aus 0,5 g 4-Methyl-2,6-di-tert.-butylphenol (Ionol) in 5 ml Methanol abgestoppt und die Temperatur unter einem Stickstoffstrom auf 20 °C ansteigen lassen. Unter dem Mikroskop zeigt das Reaktionsgemisch dunkelviolette klettenartige Polyacetylengebilde mit einem Durchmesser von ca. 0,1 mm (Fig. 1). Die Suspension enthält 2,5 g Polyacetylen pro Liter.

Beispiel 3

Zu 1 l einer nach Beispiel 1 hergestellten Polyacetylensuspension fügt man unter Rühren bei 20 °C eine Lösung von 4 g Iod in 100 ml Toluol und rührt 2 Stunden bei Raumtemperatur nach. Die ursprünglich violette Lösung entfärbt sich und man erhält eine dotierte klettenförmige Polyacetylenteilchen enthaltende Suspension.

Beispiel 4

Analog Beispiel 3 wurde eine Suspension, die nach Beispiel 2 hergestellt wurde, mit einer Lösung von 2,5 g Iod in 100 ml Methylenchlorid dotiert.

Beispiel 5

Zu 1 l einer Polyacetylensuspension nach Beispiel 2, die nach Beispiel 4 mit Iod dotiert wurde und 1 g dotiertes Polyacetylen enthält, fügt man 100 g feines Polyamid-Pulver. Durch gemeinsames Absaugen erhält man ein graues Polymerpulver, das nach thermoplastischer Verarbeitung antistatische Formkörper liefert.

Beispiel 6

Zu 1 l einer Methylenchloridsuspension nach Beispiel 2 und 4, die 2 g Iod-dotiertes Polyacetylen enthält, fügt man 198 g fein verteiltes Polyacrylnitril. Filtrieren und Trocknen liefert 200 g eines grauen, polyacetylenhaltigen Polyacrylnitril-Pulvers, das bei der thermoplastischen Verarbeitung antistatische Formkörper mit einem Oberflächenwiderstand von $10^7$ Ω liefert.

Beispiel 7

Zu 1 l einer nach Beispiel 2 und 4 hergestellten Suspension fügt man 100 g eines Polycarbonats und rührt bis zur vollständigen Lösung des Polymeren. Man läßt die so erhaltene Suspension in 5 l Methanol unter Rühren einfließen, wobei sich das Polycarbonat in feiner Form fest abscheidet. Filtrieren und Trocknen liefert ein Polycarbonat-Pulver, das dotiertes Polyacetylen in Kletten- bzw. Faserform enthält und thermoplastisch zu antistatischen Formkörpern verarbeitet werden kann.

Beispiel 8

Analog Beispiel 7 lassen sich $H_2SO_4$-dotierte und $SbCl_5$-dotierte Polyacetylensuspensionen herstellen und verarbeiten.

Beispiel 9

Zu 1 l einer nach Beispiel 2 hergestellten und mit Chromschwefelsäure dotierten Polyacetylensuspension fügt man 100 g Polycarbonat und rührt bis zur klaren Lösung des Polycarbonats. Aus der so erhaltenen Suspension erhält man durch Sprühtrocknung ein feines, dotierte Polyacetylenteilchen enthaltendes Polycarbonatpulver, das thermoplastisch oder über Lösung zu antistatischen Formkörpern oder Überzügen verarbeitet werden kann.

**Patentansprüche**

1. 0,01 bis 50 Gew.-% kletten- oder faserförmige dotierte Polyacetylen-Teilchen enthaltende thermoplastisch verarbeitbare Polymergranulate oder -pulver.

2. Thermoplastisch verarbeitbare Polymergranulate oder -pulver gemäß Anspruch 1, dadurch gekennzeichnet, daß sie 0,1 bis 20 Gew.-% kletten- oder faserförmige dotierte Polyacetylen-Teilchen enthalten.

3. Verfahren zur Herstellung von 0,01 bis 50 Gew.-% kletten- oder faserförmige dotierte Polyacetylen-Teilchen enthaltendem, thermoplastisch verarbeitbarem Polymergranulat oder -pulver, wobei man das Polymer und die speziellen dotierten Polyacetylen-Teilchen in Anwesenheit einer inerten Suspendierflüssigkeit vermischt und anschließend diese Flüssigkeit entfernt.

4. Verfahren zur Herstellung von 0,01 bis 50 Gew.-% kletten- oder faserförmige dotierte Polyacetylen-Teilchen enthaltendem, thermoplastisch verarbeitbarem Polymergranulat oder -pulver, wobei man eine die speziellen dotierten Polyacetylen-Teilchen enthaltende Kunstofflösung sprühtrocknet oder gefriertrocknet.

5. Verfahren zur Herstellung von 0,01 bis 50 Gew.-% kletten- oder faserförmige dotierte Polyacetylen-Teilchen enthaltendem, thermoplastisch verarbeitbarem Polymergranulat oder -pulver, wobei man eine, die speziellen dotierten Polyacetylen-Teilchen enthaltende Kunststofflösung mit einem geeigneten Fällungsmittel versetzt und das ausgefällte Kunststoffpulver gemeinsam mit den speziellen dotierten Polyacetylen-Teilchen abfiltriert.

6. Verfahren zur Herstellung von 0,01 bis 50 Gew.-% kletten- bzw. faserförmige dotierte Polyacetylen-Teilchen enthaltendem Polymerpulver, wobei man einer, die speziellen dotierten Polyacetylen-Teilchen enthaltenden Suspension einen im Suspendiermittel schwer löslichen Kunststoff zusetzt und diesen gemeinsam mit den speziellen dotierten Polyacetylen-Teilchen abfiltriert.

7. Verwendung von 0,01 bis 50 Gew.-% kletten- oder faserförmige dotierte Polyacetylen-Teilchen enthaltender, thermoplastisch verarbeitbarer Polymergranulate oder -pulver zur Herstellung thermoplastischer Kunststoff-Formkörper oder -Überzüge.

**Claims**

1. Thermoplastically processible polymer granulates or powders containing 0.01 to 50 % by weight of burr-shaped or fibrous doped polyacetylene particles.

2. Thermoplastically processible polymer granulates or powders according to Claim 1, characterised in that they contain 0.1 to 20 % by weight of burr-shaped of fibrous doped polyacetylene particles.

3. Process for the production of a thermoplastically processible polymer granulate or powder containing 0.01 to 50 % by weight of burr-shaped or fibrous doped polyacetylene particles, wherein the polymer and the special doped polyacetylene particles are mixed in the presence of an inert suspending liquid and this liquid is then removed.

4. Process for the production of a thermoplastically processible polymer granulate or powder containing 0.01 to 50 % by weight of burr-shaped or fibrous doped polyacetylene particles, wherein a plastic solution containing the special doped polyacetylene particles is spray-dried or freeze-dried.

5. Process for the production of a thermoplastically procesible polymer granulate or powder containing 0.01 to 50 % by weight of burr-shaped or fibrous doped polyacetylene particles, wherein a suitable precipitant is added to the plastic solution containing the special doped polyacetylene particles and the precipitated plastic powder is filtered off together with the special doped polyacetylene particles.

6. Process for the production of a polymer powder containing 0.01 to 50 % by weight of burr-shaped or fibrous doped polyacetylene particles, wherein a plastic which is sparingly soluble in the suspending agent is added to a suspension containing the special doped polyacetylene particles and this plastic is filtered off together with the special doped polyacetylene particles.

7. Use of thermoplastically processible polymer granulates or powders containing 0.01 to 50 % by weight of burr-shaped or fibrous doped polyacetylene particles for the production of thermoplastic plastic mouldings or coatings.

**Revendications**

1. Granulés ou poudres de polymères aptes aux transformations thermoplastiques, contenant 0,01 à 50 % en poids de particules de polyacétylène dopées sous forme de peluches ou de fibres.

2. Granulés ou poudres de polymères aptes aux transformations thermoplastiques selon la revendication 1, caractérisés en ce qu'ils contiennent 0,1 à 20 % en poids de particules de polyacétylène dopées sous forme de peluches ou de fibres.

3. Procédé pour la fabrication de granulé ou poudre de polymère apte aux transformations thermoplastiques, contenant 0,01 à 50 % en poids de particules de polyacétylène dopées sous forme de peluches ou de fibres, dans lequel on mélange le polymère et les particules de polyacétylène dopées spéciales en présence d'un liquide de suspension inerte et on élimine ensuite ce liquide.

4. Procédé pour la fabrication de granulé ou de poudre de polymère apte aux transformations thermoplastiques, contenant 0,01 à 50 % en poids de particules de polyacétylène dopées sous forme de peluches ou de fibres, dans lequel on sèche par pulvérisation ou congélation une solution de matière plastique contenant les particules de polyacétylène dopées spéciales.

5. Procédé pour la fabrication de granulé ou de poudre de polymère apte aux transformations thermoplastiques, contenant 0,01 à 50 % en poids de particules de polyacétylène dopées sous forme de peluches ou de fibres, dans lequel on ajoute un agent précipitant approprié à une solution de matière plastique contenant les particules de polyacétylène dopées spéciales et on sépare par filtration la poudre de matière plastique précipitée en même temps que les particules de polyacétylène dopées spéciales.

6. Procédé pour la fabrication de poudre de polymère contenant 0,01 à 50 % en poids de particules de polyacétylène dopées sous forme de peluches ou de fibres, dans lequel on ajoute à une suspension contenant les particules de polyacétylène dopées spéciales une matière plastique difficilement soluble dans le milieu de suspension et on sépare celle-ci par filtration en même temps que les particules de polyacétylène dopées spéciales.

7. Utilisation de granulés ou poudres de polymères aptes aux transformations thermoplastiques, contenant 0,01 à 50 % en poids de particules de polyacétylène dopées sous forme de peluches ou de fibres, pour la fabrication de pièces moulées ou revêtements thermoplastiques de matière plastique.

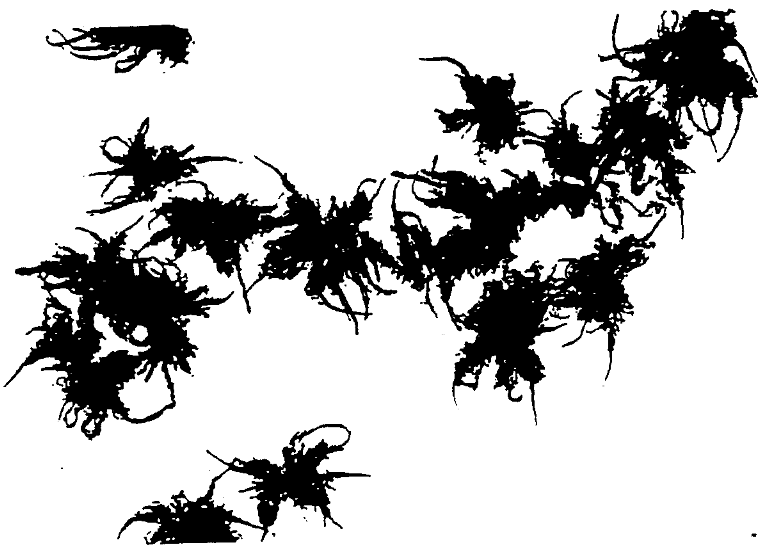

FIG. 1